# EUROPEAN PATENT APPLICATION

(11) **EP 1 985 985 A1**
(43) Date of publication of application: **29.10.2008**
(21) Application number: 07713888.1
(22) Date of filing: 07.02.2007
(51) Int. Cl.: G01N 1/06

(54) **AUTOMATIC DEVICE FOR MAKING SLICE PIECE SPECIMEN AND AUTOMATIC METHOD FOR MAKING SLICE PIECE SPECIMEN**

(30) Priority: 13.02.2006 JP 2006035058
(71) Applicant: Seiko Instruments Inc., Chiba-shi, Chiba 261-8507 (JP)
(72) Inventor: FUJIMOTO, Koji, Chiba-shi Chiba 261-8507 (JP); ITO, Tetsumasa, Chiba-shi Chiba 261-8507 (JP); MIYATANI, Tatsuya, Chiba-shi Chiba 261-8507 (JP)
(74) Representative: Cloughley, Peter Andrew
(86) International application number: PCT/JP2007/052059
(87) International publication number: WO 2007/094206

(57) **Abstract**

To enable to alleviate a burden on an operator and fabricate automatically an optimum and high quality prepared slide in accordance with a kind of an embedding block, there is provided an automatic prepared slide fabricating apparatus including first carrying means capable of carrying an embedding cassette to a cut position, cutting means for cutting out a section in a sheet-like shape by cutting an embedding block by a predetermined thickness after having been carried to the cut position, elongating means for elongating the section, second carrying means for carrying the cut section to the elongating means, transcribing means for transcribing the elongated section onto a board to fabricate a prepared slide, and controlling means for respectively controlling the respective means and having a condition table previously inputted with a fabricating condition in fabricating the prepared slide, in which the controlling means controls the respective means such that the embedding cassette carried by the first carrying means is checked with the fabricating condition inputted to the condition table, thereafter, fabricated by the condition in accordance with the embedding cassette.

## Description

### BACKGROUND OF THE INVENTION

### FIELD OF THE INVENTION

The present invention relates to an automatic prepared slide fabricating apparatus and an automatic prepared slide fabricating method for automatically fabricating a prepared slide used in scientific experiments, microscopic observation or the like.

### DESCRIPTION OF THE RELATED ART

In a related art, a microtome is generally known as an apparatus of fabricating a prepared slide used in scientific experiments or microscopic observation. According to the prepared slide, a section having a thickness of several µm (for example, 3 µm through 5 µm) is fixed onto a board of slide glass or the like. An explanation will be given here of a general method of fabricating a prepared slide by utilizing a microtome.

First, a living body sample of a formalin-fixed living body, animal or the like is subjected to paraffin substitution, thereafter, a surrounding thereof is further fixed by paraffin to be solid to thereby fabricate an embedding block in a block state. Next, the embedded block is set to a microtome constituting an exclusive instrument for fabricating a prepared slide of a tissue section and is subjected to rough cutting. By the rough cutting, a surface of the embedding block becomes a smooth face and is brought into a state in which a face of the embedded living body sample constituting an object of experiment or observation which is intended to observe is exposed to the surface.

After the rough cutting has been finished, regular cutting is carried out. This is a step of slicing the embedding block to be extremely thin by the above-described thickness by a disposable blade provided to the microtome. Thereby, a section having an aimed face can be provided. At this occasion, the thickness of the section can be made to be proximate to a thickness of a cell level by controlling to slice the embedding block thinly by a micrometer order, and therefore, a prepared slide which is easier to observe can be provided. Therefore, it is requested to fabricate the thin section the thickness of which is controlled as much as possible. Further, the regular cutting is continuously carried out until providing a necessary number of sheets of sections.

Successively, an elongating step of elongating the section provided by the regular cutting is carried out. That is, since the section fabricated by the regular cutting has been sliced by the extremely thin thickness as described above, the section is brought into a wrinkled state or a rounded state (for example, U-like shape). Hence, it is necessary to elongate the section by removing wrinkle or roundness by the elongating step.

Generally, the section is elongated by utilizing water and hot water. At first, the section provided by the regular cutting is floated on water. Thereby, large wrinkle or roundness of the section can be removed while preventing portions of paraffin embedding the living body sample from being stuck together. Thereafter, the section is floated on hot water. Thereby, the section is easy to be elongated, and therefore, a remaining wrinkle which has not been able to be removed by elongating the section by water, or a strain generated by a pressure received in cutting can be removed.

Further, the section which has been finished to be elongated by hot water is scooped up by a board of slide glass or the like to be mounted on the board. Further, when the elongation is assumedly insufficient at the time point, the section is mounted on a hot plate or the like along with the board and is applied with heat. Thereby, the section can further be elongated.

Finally, the board mounted with the section is put into a dehydrator to be dried. By the drying, moisture adhered by the elongation is evaporated and the section is fixed onto the board.

As a result, a prepared slide can be fabricated. Further, the fabricated prepared slide is used mainly in biological, medical fields and the like.

Here, there is increased a needs of observing manifestation of a gene or a protein comprehensively and histologically by progress of genome science in recent years starting from a method of diagnosing normality/abnormality of a tissue from a shape of a cell which has been carried out in the related art. Therefore, it is necessary to efficiently fabricate more and more uniform prepared slides. However, almost all of the above-described steps of the related art require a high degree of technology or experience, and therefore, the steps can be dealt with only by manual operation of a skilled operator and time and labor are taken thereby.

Hence, in order to resolve such a drawback as much as possible, there is provided an instrument for fabricating a prepared slide of a tissue section for automatically carrying out a portion of the above-described steps (refer to, for example, Patent Reference 1).

The instrument for fabricating a prepared slide of a tissue section automatically carries out a step of fabricating a section by cutting a set embedding block, a step of carrying the fabricated section by a carrier tape to be transcribed onto slide glass, and a step of carrying the section to an elongating apparatus along with the slide glass and elongating the section.

According to the instrument for fabricating a prepared slide of a tissue section, a burden on the operator can be alleviated, also human error by the operator can be dispensed with, and an excellent prepared slide can be fabricated.
Patent Reference 1: JP-A-2004-28910

However, according to the above-described related art apparatus, the following problem still remains.

That is, although the instrument for automatically fabricating a prepared slide of a tissue section described in Patent Reference 1 can automatically fabricate the prepared slide from the set embedding block, an operator needs to previously adjust a fabricating condition in accordance with the embedding block. Normally, when the prepared slide is fabricated from the embedding block, it is necessary to change a thickness of a cut-out section, or change a temperature or an elongation time period in elongating the section in accordance with a kind of an embedding living body sample (for example, liver, bone or brain of mouse). Therefore, even when the instrument for fabricating a prepared slide of a tissue section is used, the operator needs to confirm a kind of the living body sample included in the previously set embedding block and adjust the fabricating condition of the instrument for fabricating a prepared slide of a tissue section such that fabrication is carried out under a condition suitable for the living body sample.

Therefore, time is taken in adjustment beforehand and the prepared slide cannot efficiently be fabricated. Further, there is a possibility of bringing about human error such that the kind of the living body sample is erroneously determined, or even when the kind is correctly determined, adjusting operation is erroneously carried out. Therefore, there is a concern of deteriorating quality of the prepared sample.

### SUMMARY OF THE INVENTION

The invention has been carried out in consideration of such a situation and it is an object thereof to provide an automatic prepared slide fabricating apparatus and an automatic prepared slide fabricating method capable of alleviating a burden on an operator and capable of automatically fabricating an optimum and high quality prepared slide in accordance with a kind of an embedding block.

The invention provides the following means in order to resolve the above-described problem.

According to the invention, there is provided an automatic prepared slide fabricating apparatus for fabricating prepared slides respectively from a plurality of embedding blocks which are held by embedding cassettes and in which a living body sample is embedded in an embedding medium, the automatic prepared slide fabricating apparatus comprising first carrying means capable of carrying the embedding cassette arbitrarily selected from the plurality of embedding cassettes to a cut position, cutting means for cutting out a section in a sheet-like shape by cutting the embedding block by a predetermined thickness after carrying the embedding cassette to the cut position, elongating means including a storage tank stored with a liquid for elongating the section, second carrying means for carrying the section cut by the cutting means to the storage tank and floating the section on a liquid face, transcribing means for transcribing the section elongated by the elongating means on a board to fabricate the prepared slide, and controlling means for respectively controlling the respective means and having a condition table previously respectively inputted with a fabricating condition in fabricating the prepared slide for a plurality of the embedding cassettes, wherein the controlling means controls the respective means such that the embedding cassette carried by the first carrying means is checked with the fabricating condition inputted to the condition table and thereafter fabricated under the fabricating condition in accordance with the embedding cassette.

Further, according to the invention, there is provided an automatic prepared slide fabricating method for cutting out sections respectively from a plurality of embedding blocks which are held by embedding cassettes and in which a living body sample is embedded in an embedding medium and transcribing the sections on boards to fabricate prepared slides, the automatic prepared slide fabricating method comprising a first carrying step capable of carrying the arbitrarily selected embedding cassette from the plurality of embedding cassettes to a cut position, a cutting step of cutting out the section in a sheet-like shape by cutting the embedding block carried to the cut position by a predetermined thickness, a second carrying step of carrying the cut prepared slide to a storage tank stored with a liquid and starting to elongate the section by floating the section on a liquid face, and a transcribing step of transcribing the elongated section onto the board to fabricate the prepared slide, wherein the respective steps are carried out such that after the first carrying step, the carried embedding cassette and a condition table respectively inputted previously with fabricating conditions in fabricating the prepared slides for the plurality of embedding cassettes are checked, thereafter, the prepared slides are fabricated under the fabricating conditions in accordance with the carried embedding cassettes.

According to the automatic prepared slide fabricating apparatus and the automatic prepared slide fabricating method according to the invention, the controlling means carries out the first carrying step of carrying one embedding cassette arbitrarily selected from the plurality of embedding cassettes to the cut position by controlling the first carrying means. At this occasion, an operator may hand the embedding cassette to the first carrying means, or the first carrying means may take up the embedding cassette placed at a predetermined position to carry.

When the embedding cassette is carried to the cut position, the cutting means carries out the cutting step of fabricating the section by cutting (slicing) the embedding block held at the embedding cassette in the sheet-like shape by the predetermined thickness (for example, as extremely thin as 5 µm). The second carrying means carries out the second carrying step of carrying the cut section to the storage tank stored with the liquid of water or the like and floating the section on a water face (liquid face) to start elongating. The prepared slide is brought into a state of being elongated by removing wrinkle or roundness in cutting by the elongating means. Further, after elongation, the transcribing means carries out the transcribing step of transcribing to fix the section floating on the water face onto the board of slide glass or the like. As a result, the prepared slide fixed with the section on the board can be fabricated.

Here, the controlling means includes the condition table previously respectively inputted with the various fabricating conditions in fabricating the prepared slides for a plurality of the embedding cassettes. That is, there is provided the condition table for fabricating the optimum prepared slides in accordance with the kinds of the embedding blocks held by the respective embedding cassettes (further specifically, kinds of embedding living body samples). Further, the fabricating condition also includes the number of sheets of the necessary minimum prepared slides in accordance with the kind of the embedding block.

Therefore, the controlling means can instantaneously specify the fabricating condition in accordance with the embedding cassette by checking the embedding cassette carried by the first carrying means with the condition table. Further, the controlling means controls operations of the cutting means, the second carrying means, the elongating means and the transcribing means to carry out an operation thereafter under the fabricating condition specified here. As a result, the prepared slides can be fabricated under the optimum condition in accordance with the kind of the embedding block.

Further, after fabricating the necessary number of sheets of the prepared slides in accordance with the fabricating condition from the embedding block which has been carried first, the controlling means returns the embedding cassette and carries a successive one of the embedding cassette to the cut position. That is, the first carrying step is repeated. Further, by repeating the above-described respective steps, the prepared slides can be fabricated automatically by respectively cutting out the necessary number of sheets of the sections from the plurality of embedding blocks.

Further, for example, by only delivering the embedding cassettes to the first carrying means in an order inputted to the condition table by the operator, the prepared slides can automatically be fabricated under the optimum fabricating condition. Therefore, the operator per se needs not to confirm the kind of the embedding block or adjust the fabricating condition beforehand as in the related art. Therefore, the burden on the operator can be alleviated and the high quality prepared slide can be fabricated.

As described above, according to the automatic prepared slide fabricating apparatus and the automatic prepared slide fabricating method of the invention, the burden on the operator can be alleviated, and the optimum and high quality prepared slide can automatically be fabricated in accordance with the kind of the embedding block.

Further, according to the automatic prepared slide fabricating apparatus according to the invention, there is provided the automatic prepared slide fabricating apparatus, wherein the fabricating condition is a cutting condition including at least one of a thickness of the section, a cutting speed or a draw angle in cutting in cutting the embedding block by the cutting means.

Further, according to the automatic prepared slide fabricating method according to the invention, there is provided the automatic prepared slide fabricating method, wherein the fabricating condition is a cutting condition having at least one of a thickness of the section, a cutting speed and a draw angle in cutting the embedding block by the cutting step.

According to the automatic prepared slide fabricating apparatus and the automatic prepared slide fabricating method according to the invention, in the cutting step, the cutting means changes at least one of the thickness of the section and the cutting speed and the draw angle (cutting angle relative to the embedding block) by receiving an instruction from the controlling means. By changing the cutting condition in accordance with the kind of the embedding block in this way, for example, even when the embedding living body samples are constituted by tissues having different hardnesses as in liver, bone, muscle of a mouse, the sections can be cut out by cutting the tissues under the respective optimum cutting conditions. Therefore, damage applied to the living body sample can be minimized and the high quality prepared slide can be fabricated.

Further, according to the automatic prepared slide fabricating apparatus according to the invention, there is provided the automatic sliced prepared slide fabricating apparatus, wherein the fabricating condition is an elongating condition including at least one of a temperature of the liquid and a time period of being floated on the liquid face in floating the section on the liquid to elongate.

Further, according to the automatic prepared slide fabricating method of the invention, there is provided the automatic prepared slide fabricating method, wherein the fabricating condition is an elongating condition having at least one of a temperature of the liquid and an elongation time period when the section is floated on the liquid to be elongated.

According to the automatic prepared slide fabricating apparatus and the automatic prepared slide fabricating method according to the invention, when the section is floated on the liquid face to be elongated, the temperature of the liquid stored to the storage tank is changed, or after floating the section on the liquid face, an elongation time period (a time period of floating the section on the liquid face) by controlling a timing of operating the transcribing means. By changing the elongating condition in accordance with the kind of the embedding block, for example, even when the embedded living body samples are constituted by tissues having different hardnesses or water absorbencies as in liver, bone, and muscle of mouse, the tissues can be elongated respectively under the optimum elongating conditions. Therefore, the living body sample can firmly be elongated and high quality prepared slide can be fabricated.

Further, according to the automatic prepared slide fabricating apparatus of the invention, there is provided the automatic prepared slide fabricating apparatus, wherein the plurality of embedding cassettes are previously respectively described with the individual data including at least data of the embedding blocks respectively held thereby, further comprising reading means for reading the individual data when the arbitrarily selected embedding cassette is carried to the cut position, wherein the controlling means specifies a kind of the embedding cassette based on the read individual data and checks the kind with the fabricating condition inputted to the condition table.

Further, according to the automatic prepared slide fabricating method of the invention, there is provided the automatic prepared slide fabricating method, wherein the plurality of embedding cassettes are previously respectively described with individual data including at least data of the embedding blocks respectively held thereby, further comprising a reading step of reading the individual data after the first carrying step, wherein kinds of the embedding cassettes are specified based on the individual data read at the reading step and checked with the fabricating condition inputted to the condition table.

According to the automatic prepared slide fabricating apparatus and the automatic prepared slide fabricating method according to the invention, first, the embedding cassette holding the embedding block is previously marked with the individual data including data of the embedding block (specifically, data showing from which laboratory animal the living body sample is sampled, data showing gender of the laboratory animal, data showing from which organ of the laboratory animal the living body sample is sampled). Therefore, by only investigating on the individual data, the kind of the embedding block held by the embedding cassette can firmly be determined.

Further, when the embedding cassette is carried to the cut position by the first carrying step, the reading means carries out the reading step of reading the individual data of the embedding cassette. Further, the reading means outputs the read individual data to the controlling means. By the reading step, the controlling means can firmly specify the kind of the embedding cassette which has been carried first, that is, which embedding block the embedding cassette holds. Further, the controlling means specifies the kind of the embedding cassette, thereafter, checks with the condition table to deduce the optimum fabricating condition and controls the respective means to carry out fabrication under the fabricating condition.

Particularly, since the reading means is provided, even when the operator hands the embedding cassettes to the first carrying means indiscriminately regardless of an order or the like described in the condition table, the prepared slides can firmly be fabricated under the optimum fabricating conditions in accordance with the kinds of the respective embedding cassettes. Therefore, the burden on the operator can further be alleviated and the operational time period can further be shortened.

Further, according to the automatic prepared slide fabricating apparatus of the invention, there is provided the automatic prepared slide fabricating apparatus, wherein the controlling means includes a storing portion for storing the read individual data along with the fabricating condition and forming an operation table.

Further, according to the automatic prepared slide fabricating method of the invention, there is provided the automatic prepared slide fabricating method, further comprising a storing step of storing the read individual data along with the fabricating condition to form an operation table after the reading step.

According to the automatic prepared slide fabricating apparatus and the automatic prepared slide fabricating method according to the invention, the controlling means carries out the storing step of deducing the fabricating condition by checking the individual data read by the reading means with the condition table and storing the deduced fabricating condition to the storing portion along with the individual data when the respective means are controlled by the fabricating condition. Thereby, the storing portion can successively be stored with the kinds of the prepared slides which have been carried actually and the fabricating conditions for the embedding cassettes and can form the operation table constituting a list of the embedding cassettes which are operated actually.

Therefore, the operator can easily confirm an actual operational situation or past history at a glance by only confirming the operation table. Therefore, the higher quality control can be carried out.

Further, according to the automatic prepared slide fabricating apparatus of the invention, there is provided the automatic prepared slide fabricating apparatus, wherein in fabricating a plurality of the prepared slides from the same embedding block, the controlling means makes the storing portion store branch numbers for respectively discriminating the plurality of prepared slides in a state of being added to the individual data.

Further, according to the automatic prepared slide fabricating method of the invention, there is provided the automatic prepared slide fabricating method, wherein in the storing step, there is stored branch numbers for respectively discriminating the plurality of prepared slides when a plurality of the prepared slides are fabricated from the same embedding block in a state of being added to the individual data.

According to the automatic prepared slide fabricating apparatus and the automatic prepared slide fabricating method according to the invention, when the plurality of, for example, 5 sheets of the sections are cut out from the single embedding block to fabricate 5 sheets of the prepared slide, the controlling means makes the storing portions store 5 of the branch numbers in a state of being added to the read individual data. Thereby, it can firmly be stored that 5 of the prepared slides are fabricated by the same embedding block. Therefore, the operation table can further accurately be fabricated and the quality control can further accurately be carried out.

Further, according to the automatic prepared slide fabricating apparatus of the invention, there is provided the automatic prepared slide fabricating apparatus, wherein the controlling means includes a determining portion for determining an acceptability of whether the section transcribed onto the board is fabricated in accordance with the fabricating condition by observing the fabricated prepared slide, and makes the storing portion store a determination result by the determining portion in a state of being added to the individual data.

Further, according to the automatic prepared slide fabricating method of the invention, there is provided the automatic prepared slide fabricating method, further comprising a determining step of determining an acceptability of whether the section transcribed onto the board is fabricated in accordance with the fabricating condition by observing the fabricated prepared slide after the transcribing step, wherein a determination result by the determining step is stored in the state of being added to the individual data in carrying out the storing step.

According to the automatic prepared slide fabricating apparatus and the automatic prepared slide fabricating method according to the invention, the determining portion carries out the determining step of observing the prepared slide fabricated by the transcribing step and determining whether the section transcribed onto the board is fabricated in accordance with the fabricating condition inputted to the condition table. Further, in carrying out the storing step, the controlling means stores a determination result by the determining portion in a state of being added to the individual data. Thereby, the operator can confirm whether the prepared slide is actually fabricated in accordance with the fabricating condition by taking a look at the operation table. Therefore, accuracy of the quality control can further be promoted and an acceptable product and an unacceptable product can easily be classified.

Further, according to the automatic prepared slide fabricating apparatus of the invention, there is provided the automatic prepared slide fabricating apparatus, wherein when the determining portion determines the section as unacceptable, the controlling means controls to fabricate the prepared sample again by cutting out the section from the same embedding block and makes the determining portion determine again.

Further, according to the automatic prepared slide fabricating method of the invention, there is provided the automatic prepared slide fabricating method, wherein when the section is determined to be unacceptable in the determining step, the respective steps are carried out to fabricate the prepared slide again by cutting out the section from the same embedding block and the prepared slide is determined again.

According to the prepared slide fabricating apparatus and the automatic prepared slide fabricating method according to the invention, when the determining portion determines that the fabricated prepared slide does not coincide with the fabricating condition (fail), the controlling means makes the cutting means cut out the section from the same embedding block to fabricate the prepared slide again. Further, the determining portion observes a newly fabricated one of the prepared slide again and determines again whether the prepared slide coincides with the fabricating condition. Further, the controlling means repeatedly fabricate the prepared slide until the determining portion determines that the fabricated prepared slide coincides with the fabricating condition. Therefore, a number of the high quality prepared slides which are determined to be acceptable can efficiently be fabricated.

Further, according to the automatic prepared slide fabricating apparatus of the invention, there is provided the automatic prepared slide fabricating apparatus, wherein when the determining portion determines the section again by a predetermined number of times, the controlling means stops fabricating the prepared slide again and stores the stoppage to the storing portion.

Further, according to the automatic prepared slide fabricating method of the invention, there is provided the automatic prepared slide fabricating method, wherein when the prepared slide is determined again by a predetermined number of times, the prepared slide is stopped to be fabricated again and the stoppage is stored in the storing step.

According to the automatic prepared slide fabricating apparatus and the automatic prepared slide fabricating method according to the invention, in a case in which even when the prepared slides are refabricated by a predetermined number of times, it is not determined that the prepared slides coincide with the fabricating condition, the controlling means stops refabricating the prepared slide from the embedding block and makes the storing portion store the stoppage. Thereby, when the fabrication is not correctly carried out by some cause, it can be prevented to uselessly continue the operation. Therefore, a useless operational time period can be dispensed with, and useless consumption of the embedding block can be prevented. Further, since the stoppage is stored to the storing portion, the operator is easy to specify the cause thereafter.

Further, according to the automatic prepared slide fabricating apparatus of the invention, there is provided the automatic prepared slide fabricating apparatus, further comprising a storage for storing a plurality of the embedding cassettes to be able to take out and in therefrom and thereto, wherein the controlling means controls the first carrying means to take out the arbitrarily selected embedding cassette from the storage and carrying the embedding cassette to the cut position, returns the embedding cassette to the storage after cutting out the necessary number of sheets of the sections, and take out a successive one of embedding cassette.

Further, according to the automatic prepared slide fabricating method of the invention, there is provided the automatic prepared slide fabricating method, wherein in the first carrying step, the arbitrarily selected embedding cassette is taken out from a storage previously stored with a plurality of the embedding cassettes to be able to be taken out and in therefrom and thereto to carry to the cut position, after cutting out the necessary number of sheets of the sections, the embedding cassette is returned to the storage and a successive one of the embedding cassette is taken out again.

According to the automatic prepared slide fabricating apparatus and the automatic prepared slide fabricating method according to the invention, since the storage is provided, the operator can store the plurality of embedding cassettes previously in the storage. Further, in the first carrying step, the first carrying means takes out one of the embedding cassettes stored to the storage to carry to the cut position. Further, after fabricating the prepared slides by cutting out the necessary number of sheets of the sections from the embedding cassette held in the embedding cassette, the first carrying means returns the embedding cassette to an original position of the storage, and takes out a successively selected one of the embedding cassette from the storage to carry to the cut position.

In this way, by only storing the embedding cassettes previously in the storage by the operator, the operation of interchanging the embedding cassettes can automatically be carried out efficiently. Therefore, the burden on the operator can further be alleviated and the operational time period can be shortened.

Further, according to the automatic prepared slide fabricating apparatus of the invention, there is provided the automatic prepared slide fabricating apparatus, wherein the transcribing means includes containing shelves for containing a plurality of the prepared slides, and wherein the control portion controls the transcribing means to contain the fabricated prepared slides to the containing shelves.

Further, according to the automatic prepared slide fabricating method of the invention, there is provided the automatic prepared slide fabricating method, wherein in the transcribing step, the fabricated prepared slides are contained in containing shelves capable of containing a plurality of the prepared slides.

According to the automatic prepared slide fabricating apparatus and the automatic prepared slide fabricating method according to the invention, after the transcribing step, the prepared slides fabricated by the transcribing means are automatically contained in the containing shelves. As a result, the successively fabricated prepared slides can be contained in the containing shelves. Therefore, the burden on the operator can further be alleviated and the operational time period can further be shortened. Further, since the finished prepared slides are contained in the exclusive containing shelves, thereafter, the prepared slides are easy to be handled.

According to the automatic prepared slide fabricating apparatus and the automatic prepared slide fabricating method according to the invention, the burden on the operator can be alleviated, and the optimum and high quality prepared slide in accordance with the kind of the embedding block can automatically be fabricated.

### BRIEF DESCRIPTION OF THE DRAWINGS

Fig. 1 is a perspective view of an embedding cassette and an embedding block used in an automatic prepared slide fabricating apparatus according to the invention;
Fig. 2 is a constitution block diagram showing an embodiment of the automatic prepared slide fabricating apparatus according to the invention;
Fig. 3 is a side view of a storage and a block handling robot shown in Fig. 2;
Fig. 4 is a top view of the storage and the block handling robot shown in Fig. 3;
Fig. 5 is a side view of a cutting mechanism, a section carrying mechanism, a recording portion and an elongating mechanism shown in Fig. 2;
Fig. 6 is a side view of a slide glass handling robot shown in Fig. 2;
Fig. 7 is a flowchart when a prepared slide is fabricated by the automatic prepared slide fabricating apparatus shown in Fig. 2; and
Fig. 8 is a view showing other example of the elongating mechanism shown in Fig. 6 and is a view showing an elongating mechanism capable of elongating a prepared slide by elongation by water, elongation by hot water, elongation by a hot plate.

- B: embedding block
- B1: section
- D: individual data
- G: slide glass (board)
- H: prepared slide
- K: embedding cassette
- P: cut position
- S: living body tissue (living body sample)
- W1: water (liquid)
- W2: hot water (liquid)
- 1: automatic prepared slide fabricating apparatus
- 2: storage
- 3: block handling robot (first carrying means)
- 4: reading portion (reading means)
- 5: cutting mechanism (cutting means)
- 6: elongating mechanism (elongating means)
- 7: section carrying mechanism (second carrying means)
- 8: slide glass handling robot (transcribing means)
- 9: control portion (controlling means)
- 9a: memory portion (storing portion)
- 9b: condition table
- 9c: operation log (operation table)
- 9d: determining portion
- 10: recording portion (recording means)
- 28: water tank (storage tank)
- 36: prepared slide containing shelf (containing shelf)

### DETAILED DESCRIPTION OF THE PREFERRED EMBODIMENTS

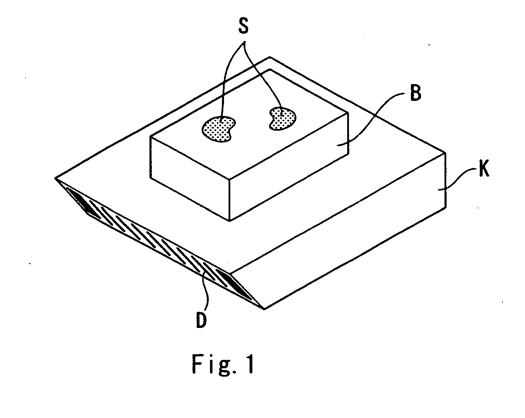

An explanation will be given of an embodiment of an automatic prepared slide fabricating apparatus and an automatic prepared slide fabricating method according to the invention in reference to Fig. 1 through Fig. 7 as follows. The automatic prepared slide fabricating apparatus is an apparatus of automatically fabricating a prepared slide by respectively cutting sections from a plurality of embedding blocks each of which is held by an embedding cassette and embedded with a living body sample in an embedding medium and transcribing the sections onto boards.

Further, according to the embodiment, an explanation will be given by taking an example of a living body tissue sampled from a laboratory animal of mouse or monkey as a living body sample.

At first, an embedding cassette and an embedding block will be explained.

As shown by Fig. 1, an embedding block B is constituted by subjecting moisture at inside of a formalin-fixed living body tissue S to paraffin substitution, thereafter, a surrounding thereof is fixed in a block shape by an embedding medium of paraffin or the like. Thereby, the living body tissue S is brought into a state of being embedded in paraffin. Further, the embedding block B is held in an embedding cassette K formed in a box-like shape. Further, there are prepared a plurality of kinds of the living body tissues S in accordance with kinds of laboratory animals, genders of laboratory animals, or kinds of organs of laboratory animals and respectives thereof are embedded to constitute the separate embedding blocks B.

The embedding cassette K is formed by, for example, a plastic having organic solvent resistance, a portion thereof constitutes an inclined face. Further, the inclined face is previously marked with an individual data D including an identification number (serial number) for identifying individuals and a data of the embedding block B held thereby. The data of the embedding block B is a data showing from which laboratory animal the living body tissue S is sampled, or a data showing a gender of the laboratory animal, or a data showing from which organ of the laboratory animal the living body tissue S is sampled.

Therefore, by confirming the individual data D, a plurality of the embedding cassettes K can respectively be discriminated and kinds of the held embedding blocks B can be specified.

Next, the automatic prepared slide fabricating apparatus according to the embodiment will be explained.

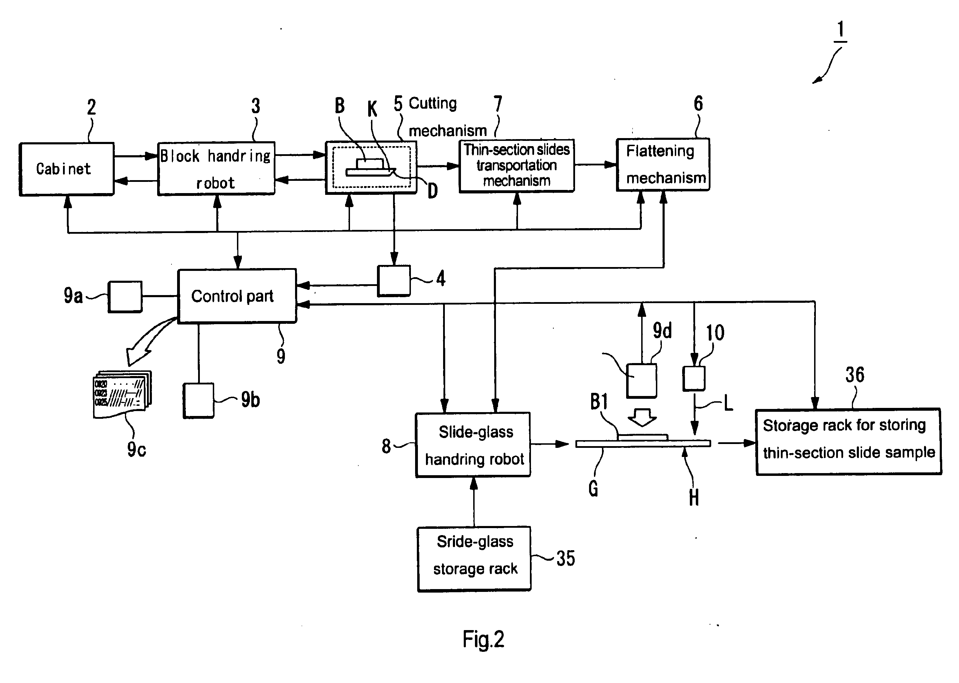

As shown by Fig. 2, the automatic prepared slide fabricating apparatus 1 of the embodiment includes a storage 2 for storing a plurality of the embedding cassettes K to be able to be taken out and taken in therefrom and thereto, a block handing robot (first carrying means) 3 capable of taking in and out a selected one of the embedding cassettes K from and to the storage 2 and carrying the selected onto a cut position P, a reading portion (reading means) 4 for reading the individual data D when the embedding cassette K is carried to the cut position P, a cutting mechanism (cutting means) 5 for cutting the embedding block B by a predetermined thickness after carrying the embedding cassette K to the cut position P and cutting out a section B1 in a sheet-like shape, an elongating mechanism (elongating means) 6 having a water tank (storage tank) 28 stored with water (liquid) W1 for elongating the section B1, a section carrying mechanism (second carrying means) 7 for carrying the section B1 cut out by the cutting mechanism 5 to the water tank 28 and floating the section B1 on a water face (liquid face), a slide glass handling robot (transcribing means) 8 for transcribing the elongated section B1 onto slide glass (board) G to thereby fabricate a prepared slide H, a control portion (controlling means) 9 for generally controlling the respective constituents and having a memory portion (storing portion) 9a for storing the individual data D read by the reading portion 4, and a recording portion (recording means) 10 for recording the individual data D on the slide glass G by receiving an instruction from the control portion 9.

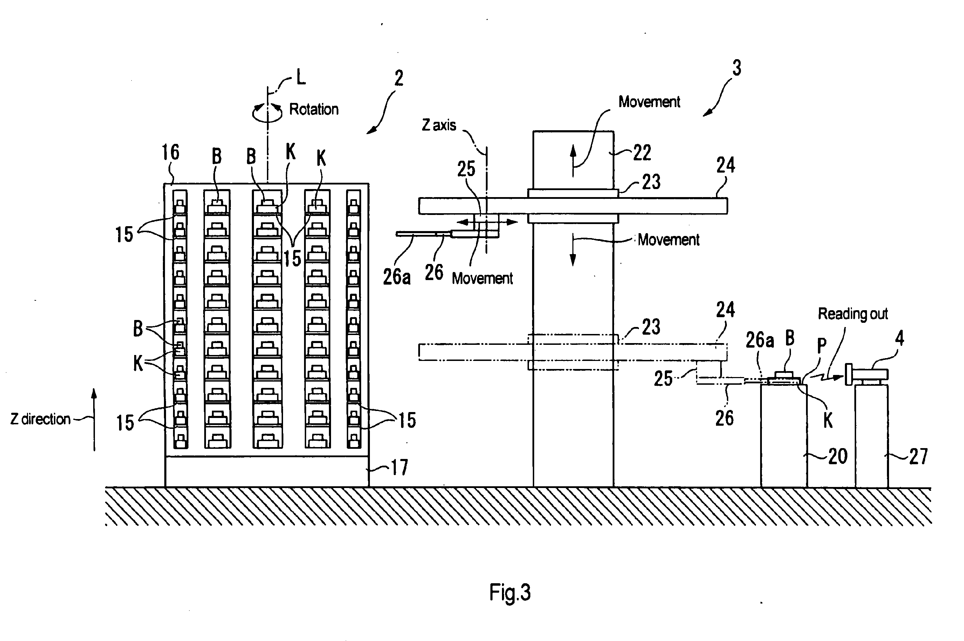

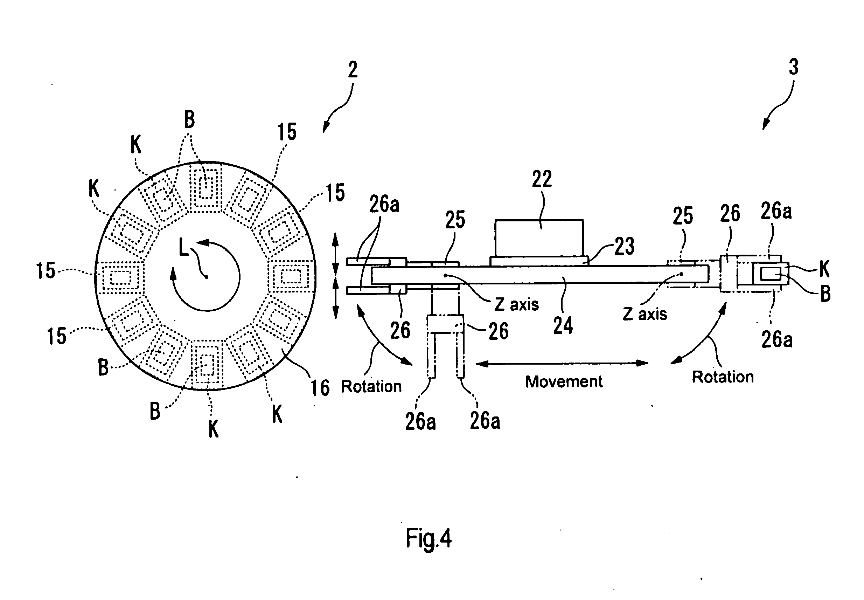

As shown by Fig. 3 and Fig. 4, the storage 2 includes a plurality of storing shelves 15 for respectively classifying to store the plurality of embedding blocks B fixed onto the embedding cassettes K, and a rotating member 16 provided with the plurality of storing shelves 15 at an outer peripheral face thereof, rotatable centering on a rotating axis L and controlled to rotate by the control portion 9.

The rotating member 16 according to the embodiment is formed in a shape of a circular column centering on the rotating axis L and fixed onto a rotating stage 17 rotated by a drive source of a motor or the like, not illustrated. Further, the control portion 9 controls the operation of the drive source. Thereby, the rotating member 16 is controlled by the control portion 9 to rotate in an arbitrary rotating direction and an arbitrary rotating speed.

Further, the storing shelves 15 are uniformly arranged on the outer peripheral face of the rotating member 16 and formed by, for example, a total of 120 pieces. That is, 10 pieces thereof are formed at predetermined intervals in Z direction constituting a direction of the rotating axis L and 12 rows thereof are formed at every 30 degrees centering on the rotating axis L by constituting one row by the 10 pieces.

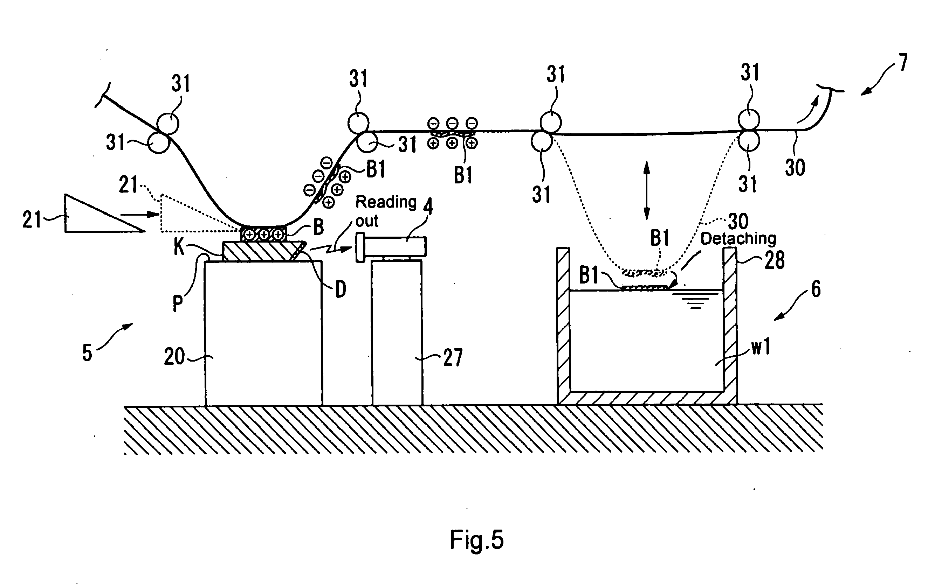

As shown by Fig. 5, the cutting mechanism 5 includes a block fixing base 20 for mounting to fix the embedding cassette K at a position of being remote from the storage 2 by a constant distance, and a cutting blade 21 operated to slide relative to the embedding block B held by the embedding cassette K which is mounted to be fixed thereon.

The cutting blade 21 is operated to slide by a predetermined speed and a draw angle by a drive mechanism, not illustrated. Further, the block fixing base 20 moves up the embedding block B from a cut face at every predetermined amount in accordance with the sliding operation of the cutting blade 21. Thereby, the embedding block B is cut by a predetermined thickness by the cutting blade 21 to cut out the section B1. That is, the cut position P is constituted by an upper face of the block fixing base 20. Further, the embedding block B mounted to be fixed to the block fixing base 20 is applied with a plus charge by a charging apparatus, not illustrated.

Further, although according to the embodiment, there is constructed a constitution of cutting the embedding block B by sliding to operate the cutting blade 21 relative to the block fixing base 20, the embodiment is not limited to the case. For example, the cutting mechanism 5 may be constituted to cut the embedding block B by fixing the cutting blade 21 and moving the block fixing base 20 to the fixed cutting blade 21. Further, the cut mechanism 5 may be constituted to cut the embedding block B by moving the cutting blade 21 and the block fixing base 20 relative to each other.

Further, as shown by Fig. 3 and Fig. 4, a Z axis guide rail 22 extended in Z direction is attached to between the storage 2 and the block fixing base 20. The Z axis guide rail 22 is attached with a lift stage 23 movable along the Z axis guide rail 22. The lift stage 23 is attached with a horizontal guide rail 24 extended in a horizontal direction. Further, the horizontal guide rail 24 is attached with a horizontal stage 25 movable along the horizontal guide rail 24 similar to the Z axis guide rail 22. Further, the horizontal stage 25 not only moves in the horizontal direction but is made to be rotatable around the Z axis as shown by Fig. 4.

Further, the horizontal stage 25 is attached with a grabbing robot 26 having a pair of arms 26a arranged in parallel with each other in a state of being remote from each other by a constant distance and capable of adjusting a distance therebetween to be able to be proximate to each other and remote from each other. Further, any of the embedding blocks B stored in the storing shelves 15 of the storage 2 is made to be able to be taken in and out to and from the storing shelf 15 by pertinently operating the lift stage 23, the horizontal stage 25 and the grabbing robot 26.

That is, the embedding block B can be taken in and out to and from the storage shelf 15 by operating the horizontal stage 25 and the lift stage 23 in a state of grabbing the embedding cassette K holding the embedding block B by the pair of arms 26a. Further, the embedding cassette K can be mounted on the block fixing base 20 constituting the cut position P by pertinently operating the lift stage 23, the horizontal stage 25 while grabbing the enveloping cassette K. Further, the lift stage 23, the horizontal stage 25 and the grabbing robot 26 are driven by a motor, not illustrated, controlled by the control portion 9.

The Z axis guide rail 22, the lift stage 23, the horizontal guide rail 24, the horizontal stage 25 and the grabbing robot 26 constitute the block handling robot 3.

Further, as shown by Fig. 3 and Fig. 5, contiguous to the block fixing base 20, there is provided a fixing base 27 for a reading portion having a height substantially the same as that of the block fixing base 20, and the reading portion 4 is installed on the fixing base 27 for the reading portion. The reading portion 4 reads the individual data D marked at the inclined face of the embedding cassette K, for example, optically when the embedding cassette K is carried to the cut position P. Further, the reading portion 4 outputs the read individual data D to the control portion 9.

Further, as shown by Fig. 5, the water tank 28 is provided contiguous to the fixing base 27 for the reading portion. The water tank 28 is a portion of constituting the elongating mechanism 6 for elongating the section B1 cut out by the cutting mechanism 5 by utilizing a surface tension.

Further, upper sides of the block fixing base 20 and the water tank 28 are provided with a carrier tape 30 previously applied with a minus charge by a charging apparatus, not illustrated. The carrier tape 30 is carried in a direction of being directed to the water tank 28 from the block fixing base 20 by a guide roller 31 and a tape drive mechanism, not illustrated.

Further, the carrier tape 30 is brought into face contact with the embedding block B when the embedding cassette K is mounted on the block fixing base 20 and slacked to be brought into contact with a surface of water W1 stored at inside of the water tank 21 when the carrier tape 30 reaches above the water tank 28.

Thereby, the section B1 cut out by the cutting mechanism 5 is adsorbed to a lower face of the carrier tape 30 by static electricity and is carried to the water tank 28 in accordance with the movement of the carrier tape 30 in an adsorbed state. Further, the section B1 is separated from the carrier tape 30 to be brought into a state of being floated on the water tank W1 by being dipped into water W1 by slacking the carrier tape 30 at a time point of reaching the water tank 28.

The carrier tape 30, the guide roller 31 and the tape drive mechanism constitute the section carrying mechanism 7.

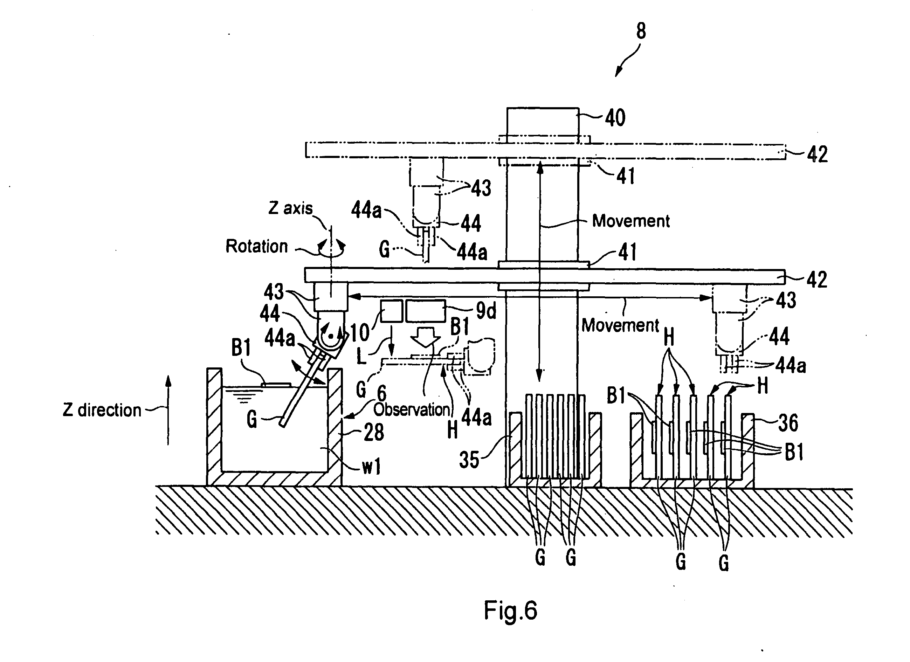

Further, as shown by Fig. 6, slide glass containing shelves 35 for previously containing a plurality of sheets of unused slide glass G, and prepared slide containing shelves (containing shelves) 36 for containing a plurality of sheets of prepared slides H transcribed with the sections B1 on the slide glass G are successively provided contiguously to the water tank 28.

Further, a Z axis guide rail 40 extended in Z direction is attached between the water tank 28 and the prepared slide containing shelves 36 similar to the block handling robot 3. The Z axis guide rail 40 is attached with a lift stage 41 movable along the Z axis guide rail 40. The lift stage 41 is attached with a horizontal guide rail 42 extended in the horizontal direction. Further, the horizontal guide rail 42 is attached with a horizontal stage 43 movable along the horizontal guide rail 42. Further, the horizontal stage 43 is not only moved in the horizontal direction but also made to be rotatable around the Z axis.

Further, the horizontal stage 43 is attached with a slide glass grabbing robot 44 in a state of being rotatable around one axis orthogonal to Z direction. The slide glass grabbing robot 44 is attached with a pair of arms 44a arranged in parallel with each other in a state of being remote from each other by a constant distance and capable of adjusting a distance therebetween to be able to be proximate to each other and remote from each other similar to the grabbing robot 26.

Further, by respectively pertinently operating the lift stage 41, the horizontal stage 43 and the slide glass grabbing robot 44, the unused slide glass G can be grabbed and the section B1 which has been elongated by being floated at inside of the water tank 28 is made to be able to fabricate the prepared slide H by being transcribed onto the grabbed slide glass G. Further, the fabricated prepared slide H is made to be able to be contained in the prepared slide containing shelf 36. A detailed explanation will be given thereof later.

The Z axis guide rail 40, the lift stage 41, the horizontal guide rail 42, the horizontal stage 43 and the slide glass grabbing robot 44 constitute the slide glass handling robot 8.

The control portion 9 generally controls the above-described respective constituents. For example, the control portion 9 controls the block handling robot 3 to take out the arbitrary selected embedding cassette K from the storage 2 to carry to the cut position P, cut out the necessary number of sheets of the sections B1 from the embedding block B, thereafter, return the embedding cassette K to the storage 2, and take out the next embedding cassette K.

Further, the control portion 9 controls the slide glass handling robot 8 to successively contain the fabricated prepared slides H to the prepared slide containing shelves 36.

Further, the control portion 9 instructs to store the individual data D transmitted from the reading portion 4 to the memory portion 9a and record the individual data D onto the slide glass G transcribed with the section B1 by instructing the recording portion 10.

The recording portion 10 is, for example, a laser marker for printing the individual data D based on an instruction from the control portion 9 by irradiating laser light L onto the slide glass G. Further, as shown by Fig. 6, the recording portion 10 is arranged between the water tank 28 and the prepared slide containing shelves 36 and prints the slide glass G before the slide glass G is contained in the prepared slide containing shelf 36 by the slide glass handling robot 8.

At that occasion, the recording portion 10 may precedingly print the slide glass G to thereafter transcribe the section B1 floating on the water face by using the printed slide glass G, or precedingly fabricate the prepared slide H by transcribing the section B1 onto the slide glass G to thereafter print the slide glass G.

Further, as shown by Fig. 2, the control portion 9 of the embodiment includes a condition table 9b previously inputted with respectively fabricating conditions in fabricating the prepared slides H for a plurality of the embedding cassettes K other than the memory portion 9a mentioned above. Further, the control portion 9 specifies a kind of the carried embedding cassette K based on the individual data D of the embedding cassette K read by the reading portion 4 and checks the individual data D with the condition table 9b. Further, the control portion 9 generally controls the above-described respective constituents such that the prepared slides H are fabricated under the fabricating conditions in accordance with the embedding cassette K.

Specifically, the fabricating conditions are a cutting condition and an elongating condition and the cutting condition and the elongating condition are previously inputted to the condition table 9b. The cutting condition is a condition for determining at least one of the thickness of the section B1, the cutting speed or the drawn angle in cutting when the embedding block B is cut by the cut mechanism 5. Further, the elongating condition is a condition of determining at least one of a temperature of water W1 and a time period of floating the section B1 on the water face when the section B1 is floated on water W1 to elongate. Further, the fabricating condition includes also the number of sheets of fabricating the prepared slides H which are made to be necessary at minimum in accordance with the kind of the embedding block B other than the cutting conditions and the elongating conditions.

Further, the control portion 9 deduces to determine the conditions from the condition table 9b in accordance with the kind of the embedding cassette K specified from the individual data D and controls the respective constituents to fabricate the prepared slides H under the conditions and the number of sheets of fabrication.

Further, the control portion 9 forms an operation log (operation table) 9c when the individual data D of the read embedding cassette K is stored to the memory portion 9a by also storing the above-described fabricating conditions (cutting condition, elongating condition and the number of sheets of fabrication). That is, the control portion 9 forms the operation log 9c simultaneously stored with an identification number of the embedding cassette K carried to the cut position P, data showing the kind of the embedding block B (that is, the kind of living body tissue S), and the fabricating conditions deduced from the condition table 9b.

Further, as shown by Fig. 2 and Fig. 6, the control portion 9 of the embodiment includes a determining portion 9d for determining acceptability of whether the section B1 has been fabricated in accordance with the fabricating conditions determined by the condition table 9b by observing the section B1 transcribed onto the slide glass G, and a result of determination by the determining portion 9d is stored to the memory portion 9a in a state of being added to the individual data D. Thereby, the operation log 9c is also stored with an actual result of fabrication. Further, the determining portion 9d determines the acceptability from a shape or a surface state of the section B1 by optically observing the section B1. Further, the prepared slide H determined to be acceptable by the determining portion 9d is recorded by the recording portion 10.

Further, when the determining portion 9d determines the section B1 as unacceptable, the control portion 9 controls the respective constituents to fabricate the prepared slide H by cutting the section B1 from the same embedding block B again and makes the determining portion 9d determine the acceptability again.

However, the control portion 9 stops fabricating the prepared slide H from the same embedding block B again when the determining portion 9d determines the acceptability again by the predetermined number of times (N times) and stores the stoppage at the memory portion 9a.

Next, an explanation will be given as follows of an automatic prepared slide fabricating method for respectively fabricating the necessary numbers of sheets of the prepared slides H in accordance with the fabricating conditions from the plurality of embedding blocks B having different kinds by the automatic prepared slide fabricating apparatus 1 constituted in this way.

The automatic slide fabricating method of the embodiment includes a first carrying step of taking out a selected one embedding cassette K from the storage 2 from the plurality of embedding cassettes K previously stored in the plurality of storage shelves 15 provided to the storage 2 in a state of being respectively classified and transmitting the embedding cassette K to the cut position P, a reading step of reading the individual data D from the embedding cassette K carried to the cut potion P, a cutting step of cutting out the section B1 by cutting the embedding block B carried to the cut position P by a predetermined thickness, a second carrying step of carrying the cut section B1 to the water tank 28 and starting to elongate the section B1 by floating the section B1 on the water face, a transcribing step of transcribing the elongated section B1 onto the slide glass G to fabricate the prepared slide H, and a recoding step of storing the read individual data D to the memory portion 9a and recording the stored individual data D onto the slide glass G after the reading step.

Further, the automatic prepared slide fabricating method of the embodiment carries out the above-described respective steps such that after the reading step, the kind of the embedding cassette K is specified based on the read individual data D, the individual data D is checked with the condition table 9b, and fabrication is carried out by the fabricating conditions in accordance with the carried embedding cassette K.

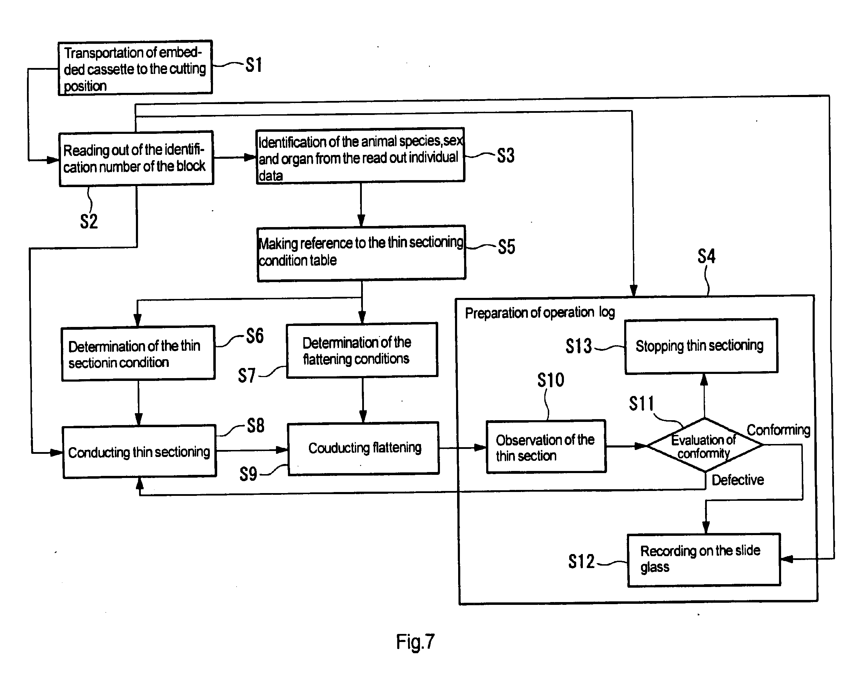

A detailed explanation will be given as follows of the automatic prepared slide fabricating method of the embodiment including the above-described respective steps in reference to a flowchart shown in Fig. 7.

First, the operator stores the plurality of embedding cassettes K mounted with the embedding blocks B respectively having different kinds previously at the storage shelves 15 of the storage 2. Further, the unused slide glass G is contained in the slide glass containing shelves 35. Successively, the operator previously inputs the fabricating conditions in accordance with the plurality of embedding cassettes K stored in the storage 2, that is, the cutting condition, the elongating condition in accordance with the kinds of the respective living body tissues S and the numbers of sheets of fabrication to the condition table 9b of the control portion 9.

Fabrication of the prepared slide H is started after finishing the above-described initial setting.

First, the control portion 9 carries out the first carrying step of taking out the selected first embedding cassette K from the plurality of embedding cassettes K stored to the storage 2 to carry onto the block fixing base 20 constituting the cut position P by controlling the block handling robot 3 (S1). That is, the pair of arms 26a of the grabbing robot 26 is inserted into the storage shelf 15 by pertinently operating the lift stage 23 and the horizontal stage 25 of the block handling robot 3. At this occasion, the control portion 9 controls the first embedding block B to face a side of the block handling robot 3 by pertinently rotating the rotating stage 17 simultaneously.

Next, the pair of arms 26a are operated to be proximate to each other to fixedly pinch the embedding cassette K mounted with the embedding block B. Next, as shown by Fig. 3, the embedding cassette K is carried onto the fixing base 20 and mounts the embedding cassette K onto the block fixing base 20 by pertinently operating the lift stage 23 and the horizontal stage 25 again while pinching the embedding cassette K.

When the embedding cassette K is mounted onto the block fixing base 20 by the first carrying step, as shown by Fig. 5, the embedding block B held by the embedding cassette K is brought into a state of being brought into face contact with the carrier tape 30 applied with minus charge.

Further, when the embedding cassette K is carried to the cut position P on the block fixing base 20, the reading portion 4 carries out the reading step of optically reading the individual data D marked to the embedding cassette K (S2) and outputs the read individual data D to the control portion 9.

By the reading step, the control portion 9 can firmly identify the carried embedding cassette K from a plurality thereof from the identification number included in the individual data D. Further, the control portion 9 can firmly specify what the kind of the embedding block B held by the embedding cassette K is from data (data showing the kind of laboratory animal, data showing the gender of laboratory animal, from which organ of laboratory animal the embedding block B is sampled) of the embedding block B included in the individual data D (S3).

Next, the control portion 9 carries out a storing step of forming the operation log 9c by storing the individual data D including the specified identification number and the data of the embedding block B to the memory portion 9a (S4) and checks the kind of the specified embedding block B with the condition table 9b (S5). As a result, an optimum fabricating condition in accordance with the kind of the carried embedding block B is deduced and fabrication is determined to be carried out under the condition. That is, the cutting condition and the elongating condition are determined (S6, S7). Further, the number of sheets of fabrication is determined simultaneously therewith. Further, the control portion 9 controls the operation of the cutting mechanism 5 and the elongating mechanism 6 under the determined condition. Further, the control portion 9 forms the operation log 9c by storing the determined fabricating condition also to the memory portion 9a in the storing step.

After the reading step, the cutting mechanism 5 cuts the embedding block B carried onto the block fixing base 20 by a sheet-like shape by sliding to operate the cutting blade 21. At this occasion, cutting is carried out while controlling at least one of the thickness of the section B1, the cutting speed and the draw angle based on the cutting condition instructed by the control portion 9 (S8). Thereby, the embedding block B can be cut under the cutting condition optimum for the living body tissue S embedded therein.

Further, the embedding block B is applied with plus charge by the charging apparatus at a time point of being mounted onto the block fixing base 20, and therefore, the section B1 cut out by the cutting step is adsorbed by static electricity to the lower face of the carrier tape 30 simultaneously with being cut out.

Further, the adsorbed section B1 is carried to the water tank 28 of the elongating mechanism 6 along with the carrier tape 30 moved by the tape drive mechanism. When the carrier tape 30 is moved to above the water tank 28, the carrier tape 30 is slackened toward the water tank 28 to be dipped into water W1 stored in the water tank 28. Therefore, the carried section B1 is dipped into water W1 along with the carrier tape 30, and therefore, the section B1 is released from being adsorbed thereto to be brought into a state of floating on the water face. Further, by floating the section B1 on the water face by a predetermined time period, wrinkle or roundness brought about in cutting is removed by the surface tension to be brought into a state of being elongated. In this way, the section B1 carried to the elongating mechanism 6 by the second carrying step is elongated by the elongating mechanism 6.

Further, in carrying out the elongating step, the elongating mechanism 6 controls the temperature of the water W1 based on the elongating condition instructed from the control portion 9. Further, elongation is finished by scooping up the section B1 floating on the water face by the slide glass handling robot 8, mentioned later, by a predetermined time period.

In this way, by changing the temperature or the elongating time period of water W1, the embedding block B can be elongated under the elongating condition optimum for the embedded living body tissue S (S9).

On the other hand, in accordance with cutting out and carrying the section B1, the slide glass handling robot 8 takes out one sheet of unused slide glass G from the slide glass containing shelf 35 by pertinently operating the horizontal stage 43 and the slide glass grabbing robot 44 to be at standby above the water tank 28.

That is, the pair of arms 44a of the slide glass grabbing robot 44 are inserted into the slide glass containing shelf 35 by pertinently operating the lift stage 41, the horizontal stage 43 and the slide glass grabbing robot 44. Next, one sheet of unused slide glass G is fixedly pinched by operating the pair of arms 44a to be proximate to each other. Further, the slide glass G is drawn out by pertinently operating the lift stage 41, the horizontal stage 43 and the slide glass grabbing robot 44 again while pinching the slide glass G to be moved to above the water tank 28. Further, the slide glass G is made to be at standby until the section B1 is carried to the water tank 28 while staying in the state.

Further, elongation is started by carrying the section B1 to the water tank 28, after an elapse of an elongation time period determined by the control portion 9, the slide glass handling robot 8 scoops up the section B1 floating on the water face by using the grabbed slide glass G by pertinently operating the lift stage 41, the horizontal stage 43 and the slide glass grabbing robot 44. Thereby, elongation can be finished in the determined elongation time period and the section B1 can be transcribed onto the slide glass G. As a result of the transcribing step, the prepared slide H is fabricated.

Further, the slide glass handling robot 8 starts carrying the fabricated prepared slide H to the prepared slide containing shelf 36 and temporarily stops carrying the prepared slide H below the determining portion 9d and the recording portion 10. Then, the determining portion 9d observes optically the section B1 grabbed by the slide glass handling robot 8 (S10) to carry out a determining step of determining acceptability of whether fabrication is carried out in accordance with the fabricating step determined by the control portion 9 from the shape or the surface state (S11). Further, the determined portion 9d transmits a result of the determination to the control portion 9.

Here, when the determining portion 9d determines the prepared slide H as acceptable, the control portion 9 stores the determination to the memory portion 9a in a state of being added to the individual data D to be described to the operation log 9c, and instructs the recording portion 10 to carry out recording. The recording portion 10 carries out a recording step of printing the individual data D including the identification number and the data of the embedding block B stored to the memory portion 9a by irradiating laser light L to the slide glass G by receiving the instruction from the control portion 9 (S12).

Thereby, the slide glass G is brought into a state of being recorded with data the same as the individual data D previously marked to the embedding cassette K. That is, the prepared slide H and the embedding block B held in the embedding cassette K are brought into a state of being corresponded to each other.

After finishing the recording step, the slide glass handling robot 8 starts carrying the prepared slide H again to contain to the prepared slide containing shelf 36.

On the other hand, when the determining portion 9d determines the section B1 to be unacceptable in the determining step, the control portion 9 stores the determination to the memory portion 9a to be described to the operation log 9c and cuts out the section B1 from the same embedding block B again to fabricate the prepared slide H. Further, the determining portion 9d carries out the determination again.

Further, in a case in which the determining portion 9d determines the section B1 as acceptable in redetermination, the control portion 9 stores the determination to the memory portion 9a along with the number of times of redetermination to be described to the operation log 9c. Further, after recording at the recording portion 10, the prepared slide H is contained in the prepared slide containing shelf 36 similar to the above-described.

Further, in a case in which the determining portion 9d does not determine the section B1 as acceptable even when the redetermination is repeated by a predetermined number of times, the control portion 9 stops refabricating the prepared slide H (S13) and stores the stoppage to the memory portion 9a to be described to the operation log 9c.

As described above, after finishing the fabrication of the necessary number of sheets of the prepared slides H in accordance with the fabricating conditions from the embedding block B held in the embedding cassette K which is carried first, the control portion 9 controls the used embedding cassette K to return to the storage 2 again by operating the block handling robot 3 and controls the block handling robot 3 to carry the successively selected unused embedding cassette K to the cut position P. Thereby, the prepared slides H can be fabricated by cutting out the necessary number of sheets of the sections B1 from the plurality of embedding blocks B successively and continuously.

As a result, the necessary number of sheets of the prepared slides H can automatically be fabricated from the embedding blocks B held in the respective embedding cassettes K while pertinently interchanging all of the embedding cassettes K stored to the storage 2 without using manual labor.

Therefore, different from the constitution of the related art, the burden on the operator can be alleviated and an operational time period can be shortened. Further, also a human error can be prevented from being brought about.

Particularly, according to the automatic prepared slide fabricating apparatus 1 of the embodiment, the control portion 9 includes a condition table 9b previously inputted with a fabricating condition in fabricating the prepared slide H. That is, the control portion 9 includes the condition table 9b for fabricating the optimum prepared slide H in accordance with the kind of the embedding block B held by each embedding cassette K (further specifically, the kind of living body tissue S embedded therein).

Therefore, in fabricating the prepared slide H, it is not necessary that the operator per se confirms the kind of the embedding block B, or adjusts the fabricating condition beforehand as in the related art. Therefore, the burden on the operator can be alleviated, and the high quality prepared slide H can be fabricated.

Further, the cutting condition is pointed out as one of the fabricating conditions, and therefore, even when the living body tissues S are the living body tissues S respectively having different hardnesses as in liver, bone and muscle, the sections B1 can be cut out respectively under the optimum cutting conditions. Therefore, damage applied to the living body tissue S can be minimized and the high quality prepared slide H can be fabricated.

Further, the elongating condition is pointed out as other condition of the fabricating conditions, and therefore, even the living body tissues S having respectively different hardnesses or' water absorbencies can invariably be elongated respectively under optimum elongating conditions. Therefore, the living body tissue S can firmly be elongated and the high quality prepared slide H can be fabricated.

Further, according to the automatic prepared slide fabricating apparatus 1 of the embodiment, the fabricated prepared slide H is recorded with the individual data D the same as that of the embedding cassette K to be brought into a state of being corresponded completely to the embedding block B constituting a basis thereof. Therefore, the operator can easily and firmly check from which embedding block B the automatically fabricated prepared slide H is fabricated. Therefore, highly accurate quality control can be carried out.

Further, in carrying out the recording step, the individual data D is printed by irradiating laser light L to the slide glass G by the recording portion 10. That is, the printing can be carried out as in a laser marker. Therefore, printing can be carried out clearly without exerting an external force to the slide glass G to be as less as possible and the slide glass G can be prevented from being bent or deformed. Further, what is to be mentioned specially is that even when an organic solvent of xylene or alcohol is used in the later step, a character printed by laser light is not vanished by being dipped in the organic solvent. Therefore, the extremely reliable and higher quality prepared slide H can be fabricated.

Further, although according to the embodiment, the recording portion 10 is constituted to carry out recording by irradiating laser light L, the invention is not limited to the case but any recording method may be used so far as recording is carried out on the slide glass G. For example, the recording portion 10 may be constituted by a thermally transcribing printer, and printing may be carried out by directly transcribing the individual data D on the slide glass G. In this case, the individual data D can be printed by sublimating ink by applying heat, and therefore, printing darkness can freely and finely be set, and printing can be carried out clearly. Therefore, the high quality prepared slide H which is easy to see can be fabricated.

Further, when the thermally transcribing printer is used, the individual data D may be printed temporarily on exclusive paper and the printed exclusive paper may be pasted onto the slide glass G without directly printing the individual data D on the slide glass G. Also in this case, the high quality prepared slide H which is easy to see can similarly be fabricated.

Further, since the storage 2 is provided, by only storing the plurality of embedding cassettes K previously in the storage 2 by the operator, also with regard to an operation of interchanging the embedding cassettes K, the operation can efficiently be carried out. Therefore, the burden on the operator can further be alleviated and the operational time period can be shortened.

Further, since the prepared slide containing shelves 36 are provided, the successively fabricated prepared slides H can automatically be contained. Therefore, the burden on the operator can be alleviated and the operational time period can be shortened also in this respect. Further, since the finished prepared slides H are contained in the exclusive containing shelves, thereafter, the prepared slides H are easy to handle.

Further, the memory portion 9a is stored with the identification numbers and the kinds of the embedding cassettes K which are actually carried and the fabricating conditions of the embedding cassettes K in a successively stored state and the operation log 9c described therewith is formed. Therefore, the operator can easily confirm the actual operational situation or the past history at a glance by only confirming the operation log 9c. Therefore, further highly accurate quality control can be carried out.

Particularly, the operation log 9c is formed in a state of adding the result of determination by the determining portion 9d to the individual data D, and therefore, the operator can confirm whether the prepared slide H is actually fabricated in accordance with the fabricating condition. Therefore, accuracy of quality control can further be promoted and an acceptable product and an unacceptable product can easily be classified.

Further, the control portion 9 repeatedly fabricates the prepared slide H until the fabricated prepared slide H is determined to be acceptable by the determining portion 9d, and therefore, a number of the prepared slides H which are determined to be acceptable can efficiently be fabricated.

Further, in a case in which even when fabricated again by the predetermined number of times, the determination of coinciding with the fabricating condition is not achieved yet, the prepared slide H is stopped fabricating again from the same embedding block B and the stoppage is stored to the memory portion 9a by the control portion 9. Therefore, when fabrication is not carried out correctly by some cause, useless operation can be prevented from being continued. Therefore, useless operational time period can be dispensed with, further, useless consumption of the embedding block B can be prevented. Further, since the stoppage is stored to the memory portion 9a, the operator is easy to specify the cause at a later stage.

Further, when the embedding cassette K stored to any of the storage shelves 15 is taken in and out by the block handling robot 3, by rotating the rotating member 16 around the rotating axis L, the plurality of storage shelves 15 arranged on the outer peripheral face can successively be directed to a side of the block handling robot 3. Since the storage shelves 15 are provided at the outer peripheral face of the rotating member 16 in this way, a number of the plural storage shelves 15 can efficiently be provided at a narrow installing space. Therefore, a total of the apparatus can be downsized. Further, a movable range of the block handling robot 3 in taking in and out the embedding block B can be restrained as small as possible. Also in this respect, the apparatus can be downsized and the constitution can be simplified.

Further, the technical range of the invention is not limited to the above-described embodiment but can variously be changed within the range not deviated from the gist of the invention.

For example, when the plurality of prepared slides are fabricated from the same embedding block in the embodiment, the control portion may control the recording portion to store the branch numbers to the memory portion in a state of being added to the common individual data and to record the individual data to the slide glass in a state of being added with the branch numbers in the recording step in order to respectively discriminate the plurality of prepared slides in the storing step.

Thereby, even when the plurality of prepared slides are fabricated from the same embedding block, by only taking a look at the record marked to the slide glass, the respectives can clearly be discriminated. Further, the operation log can further accurately be fabricated. Therefore, the quality control can further accurately be carried out.

Further, although an explanation has been given of a case in which both of the data and the identification number of the embedding block are included as the individual data previously marked to the embedding cassette, at least only the data of the embedding block may be marked thereto. Even in such a case, the fabricating condition can be deduced from the condition table from the data of the embedding block read by the reading portion' and the prepared slide can be fabricated under an optimum condition suitable for the embedding block.

Further, the embedding cassette may not be marked with the individual data or may not be provided with the reading portion. Even in such a case, the prepared slide can be fabricated under the optimum condition suitable for each embedding block similarly by controlling the block handling robot such that the operator hands the embedding cassettes to the block handling robot in accordance with an order of the embedding cassettes previously inputted to the condition table, or takes out the embedding cassettes from the storage in accordance with the condition table.

Further, although there is constructed a constitution of including both of the storage and the prepared slide containing shelves, only either one thereof may be provided, or both thereof may be dispensed with. In this case, the operator may hand the embedding cassette to the block handling robot, or the operator may receive the fabricated prepared slide from the slide glass handling robot.

However, it is preferable to include both of the storage and the prepared slide containing shelves as described above.

Further, although the first carrying means and the transcribing means are constituted respectively as the block handling robot and the slide glass handling robot, the invention is not limited to the robots. Further, although the second carrying means is constituted to adsorb the section to the carrier tape by utilizing static electricity and carry the section by the carrier tape, the invention is not limited to the constitution.

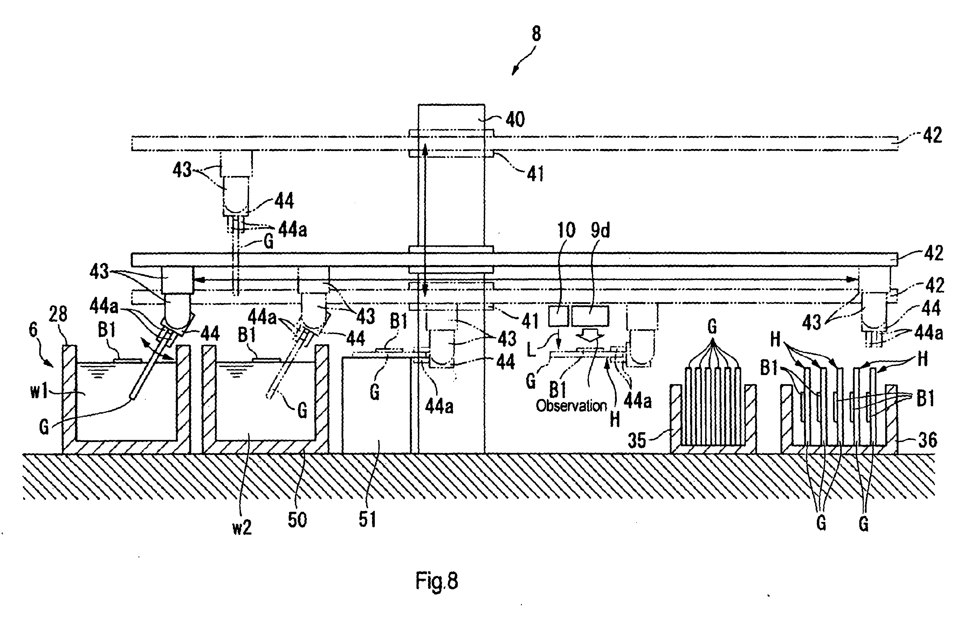

Further, although according to the embodiment, there is constructed a constitution of only providing the water tank storing water as the elongating mechanism, the invention is not limited to the case. For example, as shown by Fig. 8, the elongating mechanism 6 provided with a second water tank 50 for storing hot water W2 and a hot plate 51 may be provided contiguously to the water tank 28.

In this case, after mounting the section B1 which has been finished elongating by water on the slide glass G by the slide glass handling robot 8, the section B1 is carried to the second water tank 50 and is floated on hot water (liquid) W2. By elongation by hot water in this way, the section B1 is easy to be elongated, and therefore, remaining wrinkle or roundness which cannot be removed by being elongated by water W1 can be removed. Therefore, the prepared slide H having higher quality can be fabricated. Further, in this case, the second carrying step is constituted by an operation until floating the section B1 on hot water W2.

Further, by mounting the slide glass G mounted with the section B1 on the hot plate 51 after having been elongated by hot water, heat can further be applied to the section B1 by way of the slide glass G. Thereby, wrinkle or roundness which cannot be removed by being elongated by hot water can further be removed.

In this way, by providing the second water tank 50 and the hot plate 51, the prepared slide H having higher quality can be fabricated, and therefore, the constitution is further preferable.

Further, as the elongating condition, the condition table 9b may be inputted with whether the hot water W2 is utilized, whether the hot plate 51 is utilized, or time periods of using these as the elongating conditions.

## Claims

1. An automatic section-slides manufacturing system for manufacturing section slides respectively from a plurality of embedded blocks which each comprise an embedding medium having embedded therein a biological sample and which are held in an embedded cassette, **characterized in that** it is an automatic section-slides manufacturing system comprising:
a first transportation unit capable of transporting the embedded cassette arbitrarily selected from the plurality of embedded cassettes to a cutting position;
a cutting unit for cutting out a sheet-like section by cutting the embedded block at a predetermined thickness after the embedded cassette is transported to the cutting position;
a flattening unit having a storage tank filled with a liquid, for use in flattening the section;
a second transportation unit for transporting the section cut by the cutting unit to the storage tank and floating the section on the surface of the liquid;
a transfer unit for transferring the section having flattened by the flattening unit onto a substrate to manufacture the section slide; and
a control unit which controls each of the units above and which has a condition table of the manufacturing conditions previously input for each of the plurality of embedded cassettes, provided that the control unit checks the manufacturing conditions input in the condition table when the embedded cassette is transported by the first transportation unit, and then controls each of the units in such a manner that the manufacturing is carried out under the manufacturing conditions set for the embedded cassette.

2. The automatic section-slides manufacturing system as claimed in Claim 1, wherein the manufacturing condition is a cutting condition comprising at least one selected from the thickness of the section, the cutting speed, or the draw angle on cutting the embedded block using the cutting unit.

3. The automatic section-slides manufacturing system as claimed in Claim 1 or 2, wherein the manufacturing condition is a flattening condition comprising at least one selected from the temperature of the liquid or the time duration of floating the section on flattening the section by floating it on the liquid.

4. The automatic section-slides manufacturing system as claimed in one of Claims 1 to 3, wherein the plural embedded cassettes are previously marked with an individual data inclusive of at least the data of the holding embedded block, the system further comprises a reading unit for reading the individual data when the embedded cassette is transported to the cutting position, and the control unit specifies the type of the embedded cassette according to the read out individual data and at the same time checks the manufacturing condition input in the condition table.

5. The automatic section-slides manufacturing system as claimed in Claim 4, wherein the control unit comprises a memory unit which stores the read out individual data together with the manufacturing condition and prepares an operation table.

6. The automatic section-slides manufacturing system as claimed in Claim 5, wherein when a plurality of the section slides are prepared from the same embedded block, the control unit stores the data in the memory unit in such a state that branch numbers for respectively distinguishing the section slides are each added to the individual data.

7. The automatic section-slides manufacturing system as claimed in Claim 5 or 6, wherein the control unit further comprises an assessment part which observes the manufactured section slide and assesses the quality whether the section transferred on the substrate is manufactured according to the manufacturing condition or not, and stores the assessed result in the memory unit in such a state that the result is added to the individual data.

8. The automatic section-slides manufacturing system as claimed in Claim 7, wherein when the assessment part assesses the section to be defective, the control unit controls the system to cut out a section from the same embedded block to manufacture the section slide again and the assessment part to make reassessment.

9. The automatic section-slides manufacturing system as claimed in Claim 8, wherein when the reassessment is made for a predetermined times, the control unit discontinues the remanufacturing of the section slides, and stores the abort.

10. The automatic section-slides manufacturing system as claimed in one of Claims 1 to 9, wherein the system further comprises a cabinet for storing plural embedded cassettes in such a manner that they can be put in and taken out; the control unit controls the first transportation unit in such a manner that an arbitrarily selected embedded cassette is taken out from the cabinet and transported to the cutting position, and after the necessary number of sections are cut out, the embedded cassette is returned to the cabinet to take out the next embedded cassette.

11. The automatic section-slides manufacturing system as claimed in one of Claims 1 to 10, wherein the transfer unit comprises a storage rack for storing plural section slides, and the control unit controls the transfer unit in such a manner that the manufactured section slides are stored in the storage rack.

12. An automatic section-slides manufacturing method for manufacturing section slides respectively from a plurality of embedded blocks which each comprise an embedding medium having embedded therein a biological sample and which are held in an embedded cassette, by cutting out sheet-like sections and at the same time transferring the section on a substrate, **characterized in that** it is an automatic section-slides manufacturing method comprising:
a first transportation step for transporting the embedded cassette arbitrarily selected from the plurality of embedded cassettes to a cutting position;
a cutting step for cutting out a sheet-like section by cutting the embedded block transported to the cutting position at a predetermined thickness;
a second transportation step for transporting the cut section to a storage tank filled with a liquid and floating the cut section on the liquid surface for starting flattening; and
a transfer step for transferring the flattened section on the substrate to manufacture the section slide;
provided that each of the process steps is carried out in such a manner that, after checking the conditions table for the manufacturing conditions respectively input for manufacturing the plural embedded cassettes, the manufacturing is carried out under the manufacturing conditions set for to the embedded cassette.

13. The automatic section-slides manufacturing method as claimed in Claim 12, wherein the manufacturing condition is a cutting condition comprising at least one selected from the thickness of the section, the cutting speed, or the draw angle on cutting the embedded block using the cutting unit.

14. The automatic section-slides manufacturing method as claimed in Claim 12 or 13, wherein the manufacturing condition is a flattening condition comprising at least one selected from the temperature of the liquid or the time duration of floating section on flattening the section by floating it on the liquid.

15. The automatic section-slides manufacturing method as claimed in one of Claims 12 to 14, wherein the plural embedded cassettes are previously marked with an individual data inclusive of at least the data of the embedded block being held, the method further comprises a reading step for reading the individual data after the first transportation step, and while specifying the type of the embedded cassette according to the read out individual data, the manufacturing condition input in the condition table is checked.

16. The automatic section-slides manufacturing method as claimed in Claim 15, wherein the method further comprises a memory step for storing the read out individual data together with the manufacturing condition to prepare an operation table.

17. The automatic section-slides manufacturing method as claimed in Claim 16, wherein in the memory step, when a plurality of the section slides are prepared from the same embedding block, the data is stored in such a state that branch numbers for respectively distinguishing the section slides are each added to the individual data.

18. The automatic section-slides manufacturing method as claimed in Claim 16 or 17, wherein the method further comprises an assessment step comprising observing the manufactured section slide and assessing the quality whether the section transferred on the substrate is manufactured according to the manufacturing condition or not, and in executing the memory step, the assessed result is stored in such a state that the result is added to the individual data.

19. The automatic section-slides manufacturing method as claimed in Claim 18, wherein in case the section is assessed to be defective in the assessment step, each of the process steps are rerun in such a manner that a section is cut out from the same embedded block to manufacture the section slide again.

20. The automatic section-slides manufacturing method as claimed in Claim 19, wherein in case the reassessment is repeated for predetermined times, the remanufacturing of the section slide is discontinued and the abort is stored in the memory step.

21. The automatic section-slides manufacturing method as claimed in one of Claims 12 to 20, wherein in the first transportation step, an arbitrarily selected embedded cassette is taken out from a cabinet capable for storing plural embedded cassettes in such a manner that they are put in and taken out, is transported to the cutting position, and after the necessary number of sections are cut out, the embedded cassette is returned to the cabinet to take out the next embedded cassette.

22. The automatic section-slides manufacturing method as claimed in one of Claims 12 to 21, wherein in the transfer step, the manufactured section slides are stored in a storage rack capable of storing plural section slides.
